# EUROPEAN PATENT SPECIFICATION

(11) **EP 3 988 829 B1**
(45) Date of publication and mention of the grant of the patent: **06.08.2025**
(21) Application number: 21204326.9
(22) Date of filing: 22.10.2021
(51) Int. Cl.: F16L 3/10, F16L 55/035

(54) **CLAMP**
KLEMME
COLLIER

(30) Priority: 23.10.2020 CA 3097280
(43) Date of publication of application: 27.04.2022
(73) Proprietor: Airbus Canada Limited Partnership, Mirabel, QC J7N 3C6 (CA)
(72) Inventor: JALALI, Mohsen, Mirabel, J7N 3C6 (CA)
(74) Representative: den Braber, Gérard Paul

(56) References cited:
- FR-A1- 2 370 188
- GB-A- 2 490 562
- US-A- 2 399 899
- US-A- 3 061 253
- US-A1- 2008 245 932
- US-A1- 2010 207 001

## Description

### TECHNICAL FIELD

In general, this disclosure relates to a clamp. More preferably, the type of clamp is a saddle clamp.

### BACKGROUND

Clamps are typically used to secure articles to separate structures and some clamps can be cushioned and/or electrically grounded for certain applications. A typical type of clamp for tubing is a saddle clamp since it has separate upper and lower portions which can be applied on either side of the tubing.

One example application of a saddle clamp is within aircraft to secure fuel tubing within the fuel tank. Any such installation must be compliant with regulations which require an independent and reliable path in order to dissipate electrostatic charges. Typical regulation compliant saddle clamps use a grounded cushion in combination with a Polyetheretherketone (PEEK) bracket as a means to dissipate electrostatic charges on aircraft fuel tanks. Such a clamp is described, for example, in U.S. Patent No. 8,748,748 and shown in Figure 1. The saddle clamp has metallic inner parts 10 within an elastomer cushion 12. The metallic inner parts 10 contact the tubing while holding the tubing within the elastomer cushion 12 and are electrically connected to the metallic end portions 14.

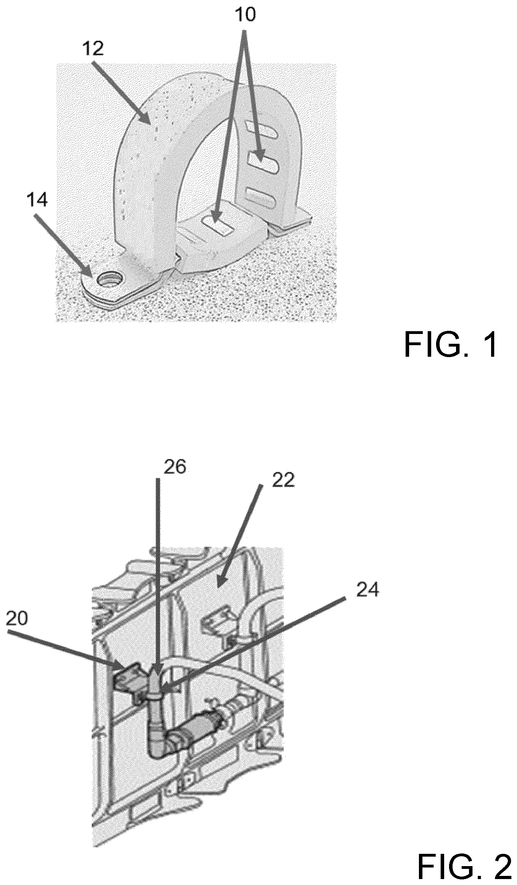

A typical installation of such a saddle clamp is provided in Figure 2. A PEEK bracket 20 is installed on a rib 22 of the aircraft onto which the saddle clamp 24 is connected. Any electrostatic charges are discharged from the tubing 26 to the saddle clamp 24 and from the saddle clamp 24 to the PEEK bracket 20. Finally, the electrostatic charges are discharged into the rib 22.

Aircraft can undergo high vibration during operation. Such high vibration can cause damage to the tubing due to friction against the metallic parts of the clamp. As a result, tubing will have to be replaced due to damage caused by friction.

Patent publication FR 2 370 188 A1 describes a bracket made of plastics insulating material. The bracket material incorporates an electrical conductor such as metallic powder or graphite and limited to 20% by weight of the insulating material so as to achieve a resistivity of between 1 and 10⁸ ohms/cm.

Patent publication US 3 061 253 A describes a conduit supporting clip. Where it is desired to provide for electrical conductivity between a conduit and a support, a rubber cushion may he interwoven with a metal strap or the cushion material may include particles which are electrically conducted.

Patent publication US 2008/245932 A1 describes a composite clamp. To provide high strength, reinforcing fibers comprising structural woven carbon fiber cloth are used together with a thermoplastic, thermoset, or thermosettable polymer.

Patent publication US 2010/207001 A1 describes a clamp in which an electrically conductive material is included with elastically deflectable material to render the clamp electrically conductive.

Patent publication GB 2 490 562 A describes a clamp assembly for securing and electrically grounding objects or payloads. A conductive comb strip is embedded in a cushion with fingers coplanar with its surface. As the clamp is tightened around its payload the fingers provide multiple points of contact with it.

### SUMMARY

There is provided a clamp comprising a polymer having metal particles dispersed therein as defined in claim 1. The clamp comprises a metal core for rigidity. The metal particles are made of aluminium. In an embodiment, the clamp can be formed as a saddle clamp and used within aircraft for holding fuel line tubing in place.

### BRIEF DESCRIPTION OF THE DRAWINGS

The invention will be further understood from the following description with reference to the attached drawings.
Figure 1 illustrates a prior art saddle clamp.
Figure 2 illustrates a prior art saddle clamp attached to a PEEK bracket on a rib of an aircraft.
Figure 3 illustrates a sample embodiment of a saddle clamp.
Figure 4 illustrates a schematic of the components of the saddle clamp.

### DETAILED DESCRIPTION

The exemplary embodiments of the present disclosure are described and illustrated below to encompass a clamp, with specific form of a saddle clamp for example purposes only. Of course, it will be apparent to those of ordinary skill in the art that the embodiments discussed below are exemplary in nature and may be reconfigured without departing from the scope of the appended claims. However, for clarity and precision, the exemplary embodiments as discussed below may include optional steps, methods, and features that one of ordinary skill should recognize as not being a requisite to fall within the scope of the appended claims.

In one example embodiment there is provided a clamp which contains monodispersed spherical particles of aluminium distributed into a thermoplastic. The size of the aluminium particles is between 100µm to 150µm in order to permit discharge of electrostatic charges. The filler packing factor, or atomic packing factor, is between 0.65 and 0.75 since such a size provides ease in manufacture. The size of the particles and filler packing factor are selected to exceed the percolation threshold in order to satisfy proper dissipation of electrostatic charges.

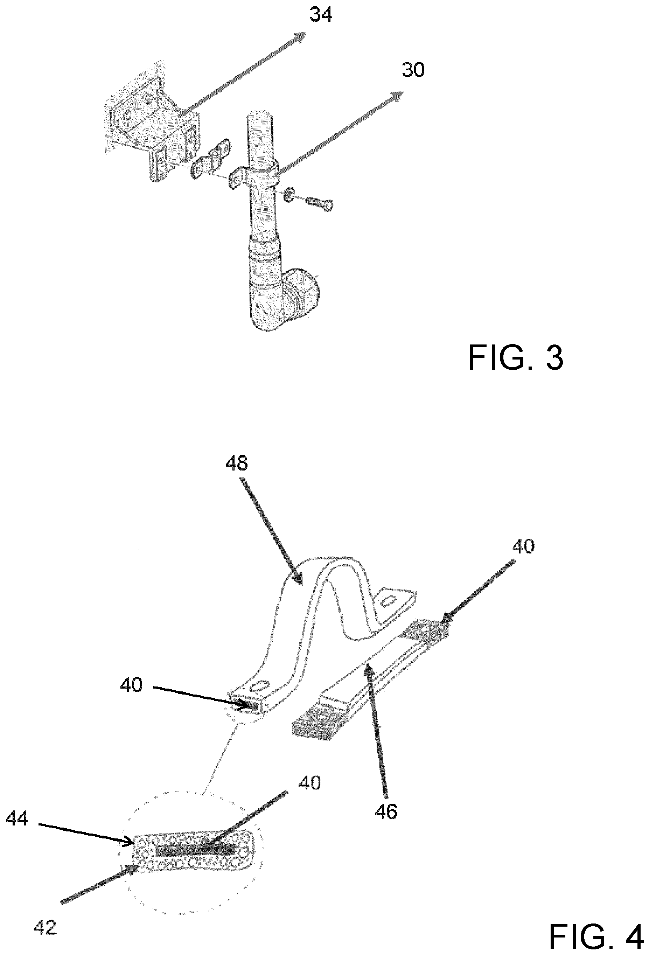

An example conductive saddle clamp is shown in Figure 3. The shape of the saddle clamp remains the same as previously known saddle clamp shapes for consistency with existing tubing requirements. In this example embodiment, the conductive saddle clamp 30 can be attached to a high resistance bracket 34. The saddle clamp 30 can be used in combination with any desired bracket, such as the current PEEK bracket 20 shown in Figure 2. When the conductive saddle clamp is attached to the bracket and the bracket is affixed to an aircraft rib, electrostatic charges are discharged from the tubing to the monodispersed spherical particles of the conductive saddle clamp to the bracket and into the rib.

As shown in Figure 4, in one example embodiment the clamp is composed with a lower portion 46 and an upper portion 48. Both portions can contain a metallic core 40 to ensure rigidity of the clamp for solid restraining of the tubing. In this example embodiment, the material surrounding the metallic core contains aluminium particles 42 dispersed in polymer 44. The polymer 44 could be any suitable polymer, such as nitrile butadiene or ethylene propylene. It is understood that the metallic core 40 can be provided only in a portion of the saddle clamp, such as the lower portion 46 or the upper portion 48, or alternatively, the metallic core could be provided throughout the entire clamp. Similarly, the aluminium particles 42 can be provided only in a portion of the saddle clamp, such as the lower portion 46 or the upper portion 48, or alternatively, the particles could be provided throughout the entire clamp.

The formation of a saddle clamp as described herein when used in an aircraft results in a reduction of any friction between the aircraft fuel tubing and the saddle clamp, thereby reducing damage to the tubing caused by vibration of the aircraft. Furthermore, the saddle clamp is consistent with the shape of previous saddle clamps and can be used within any typical arrangement requiring such a saddle clamp without modification of the surrounding structure.

It will be appreciated by one skilled in the art that variants can exist in the above-described arrangements and applications. For example, the type of polymer could be varied. Similarly, although the invention has been described with respect to an example embodiment of a saddle clamp, the invention can be applied to other types of clamps. In addition, the shape of the saddle clamp can vary, along with the formation thereof. For example, the clamp could be formed as a single integral piece, rather than two pieces. As another variation, the metallic core could be formed in only a portion of the clamp. The size of particles could vary within the claimed range, provided the intended result of dispersion of electrostatic charges remains.

Following from the above description, it should be apparent to those of ordinary skill in the art that, while the methods and apparatuses herein described constitute exemplary embodiments of the present invention, the invention described herein is not limited to any precise embodiment and that changes may be made to such embodiments without departing from the scope of the invention as defined by the claims. Consequently, the scope of the claims should not be limited by the preferred embodiments set forth in the examples but should be given the broadest interpretation consistent with the description as a whole. Likewise, it is to be understood that it is not necessary to meet any or all of the identified advantages or objects of the invention disclosed herein in order to fall within the scope of any claims, since the invention is defined by the claims and since inherent and/or unforeseen advantages of the present invention may exist even though they may not have been explicitly discussed herein.

## Claims

1. A clamp (30), comprising:
a polymer (44) having metal particles (42) dispersed therein, wherein the metal particles are made of aluminium,
wherein
the size of the metal particles and filler packing factor are selected to exceed the percolation threshold, wherein the size of the metal particles is between 100 µm to 150 µm, and wherein the filler packing factor is between 0.65 and 0.75; and
the clamp comprises a metallic core (40) within the polymer.

2. The clamp of claim 1 wherein the polymer (44) is one of the following: nitrile butadiene or ethylene propylene.

3. The clamp of any one of claims 1 and 2 wherein the clamp has an upper portion (48) and a separate lower portion (46).

4. The clamp of claim 3 wherein the metallic core (40) is within at least one of the following portions: the upper portion (48) and the lower portion (46).

5. An aircraft comprising a clamp (30) according any of claims 1 to 4, the clamp being a saddle clamp attached to a bracket (34) and holding a tubing in place.

## Patentansprüche

1. Klemme (30), umfassend:
ein Polymer (44), das darin dispergierte Metallpartikel (42) aufweist, wobei die Metallpartikel aus Aluminium bestehen,
wobei die Größe der Metallpartikel und der Füllstoffpackungsfaktor so ausgewählt sind, dass sie die Perkolationsschwelle überschreiten, wobei die Größe der Metallpartikel zwischen 100 µm bis 150 µm beträgt, und wobei der Füllstoffpackungsfaktor zwischen 0,65 und 0,75 liegt; und
die Klemme einen Metallkern (40) innerhalb des Polymers umfasst.

2. Klemme nach Anspruch 1, wobei das Polymer (44) eines der folgenden ist: Nitrilbutadien oder Ethylenpropylen.

3. Klemme nach einem der Ansprüche 1 und 2, wobei die Klemme einen oberen Abschnitt (48) und einen getrennten unteren Abschnitt (46) aufweist.

4. Klemme nach Anspruch 3, wobei sich der Metallkern (40) innerhalb mindestens eines der folgenden Abschnitte befindet: des oberen Abschnitts (48) und des unteren Abschnitts (46).

5. Luftfahrzeug, das eine Klemme (30) nach einem der Ansprüche 1 bis 4 umfasst, wobei die Klemme eine Sattelklemme ist, die an einer Halterung (34) angebracht ist und einen Schlauch an Ort und Stelle hält.

## Revendications

1. Collier (30), comprenant :
un polymère (44) ayant des particules métalliques (42) dispersées dans celui-ci, dans lequel les particules métalliques sont constituées d'aluminium,
dans lequel la taille des particules métalliques et le facteur de remplissage de charge sont choisis pour dépasser le seuil de percolation, dans lequel la taille des particules métalliques est comprise entre 100 µm et 150 µm, et dans lequel le facteur de remplissage de charge est compris entre 0,65 et 0,75 ; et
le collier comprend un noyau métallique (40) à l'intérieur du polymère.

2. Collier selon la revendication 1, dans lequel le polymère (44) est l'un des éléments suivants : nitrile butadiène ou éthylène propylène.

3. Collier selon l'une quelconque des revendications 1 et 2, dans lequel le collier présente une partie supérieure (48) et une partie inférieure (46) distincte.

4. Collier selon la revendication 3 dans lequel le noyau métallique (40) se trouve à l'intérieur d'au moins l'une des parties suivantes : la partie supérieure (48) et la partie inférieure (46).

5. Aéronef comprenant un collier (30) selon l'une quelconque des revendications 1 à 4, le collier étant un collier de selle fixé à un support (34) et maintenant en place une tubulure.
